# EUROPÄISCHE PATENTSCHRIFT

(11) **EP 2 331 799 B1**
(45) Veröffentlichungstag und Bekanntmachung des Hinweises auf die Patenterteilung: **25.01.2012**
(21) Anmeldenummer: 09736119.0
(22) Anmeldetag: 09.09.2009
(51) Int. Cl.: F01N 3/20

(54) **MODULARES TANKSYSTEM FÜR EIN FLÜSSIGES REDUKTIONSMITTEL MIT EINEM SUMPFELEMENT**
MODULAR TANK SYSTEM FOR A LIQUID REDUCING AGENT, COMPRISING A BOTTOM ELEMENT
SYSTÈME RÉSERVOIR MODULAIRE POUR UN AGENT DE RÉDUCTION DOTÉ D'UN ÉLÉMENT DE FOND

(30) Priorität: 10.09.2008 DE 102008046630
(43) Veröffentlichungstag der Anmeldung: 15.06.2011
(73) Patentinhaber: Emitec Gesellschaft für Emissionstechnologie mbH, 53797 Lohmar (DE); Geiger Automotive GmbH, 82418 Murnau (DE)
(72) Erfinder: BRÜCK, Rolf, 51429 Bergisch Gladbach (DE); HODGSON, Jan, 53840 Troisdorf (DE); REINER, Martin, 82418 Murnau (DE)
(74) Vertreter: Rössler, Matthias
(86) Internationale Anmeldenummer: PCT/EP2009/006538
(87) Internationale Veröffentlichungsnummer: WO 2010/028814

(56) Entgegenhaltungen:
- EP-A1- 1 925 354
- DE-A1- 19 508 978

## Beschreibung

Die vorliegende Erfindung betrifft ein modulares Tanksystem für ein flüssiges Reduktionsmittel mit einem Sumpfelement, wobei der Tank drei Module aufweist.

Infolge der gestiegenen Anforderungen an die Emissionsgrenzwerte von Schadstoffen bei Verbrennungskraftmaschinen, werden in größerem Umfang SCR-Anlagen in Kraftfahrzeugen eingesetzt. Diese SCR-Anlagen umfassen den Einsatz eines Reduktionsmittels, das insbesondere in flüssiger Form als Harnstoff-Wasser-Lösung in gesonderten Tankvolumen vorgehalten werden muss. Die hierbei geforderten Volumina der Reduktionsmitteltanks liegen bevorzugt in einem Bereich von 3 bis 10 Litern, im Nutzfahrzeugbereich auch bis zu 150 Litern. Insbesondere bei der nachträglichen Integration einer SCR-Anlage in ein Kraftfahrzeug im Rahmen einer Nachrüstaktion sind daher Tankformen gefordert, die den individuell sehr unterschiedlichen räumlichen Gegebenheiten der Kraftfahrzeuge angepasst sein müssen.

Tanks für flüssiges Reduktionsmittel weisen regelmäßig Entnahmerohre auf, durch die das flüssige Reduktionsmittel aus dem Tank entnehmbar ist, wobei diese Entnahmerohre sich von einem oberen Bereich des Tanks in diesen hinein erstrecken, so dass der Tank zu einem Höchstmaß entleerbar ist und gleichzeitig die zur Fixierung des Entnahmerohrs in der Tankwand notwendigen Dichtungen möglichst außerhalb des Reduktionsmittels angeordnet sind. Weiterhin weist das Entnahmerohr regelmäßig eine Heizeinrichtung auf, durch die gegebenenfalls wenigstens ein kleines Volumen gefrorenen Reduktionsmittels aufgeschmolzen und durch das Entnahmerohr aus dem Tank gefördert werden kann.

In der EP 1 925 354 A1 wird ein Reduktionsmitteltank mit einem in dem Reduktionsmitteltank angeordneten Fördermodul für das Reduktionsmittel beschrieben. Das Fördermodul wird durch eine Öffnung von oben in den Tank eingeführt und ist in einem Sumpf des Tankbodens angeordnet, wobei das Fördermodul mit einem Deckel verbunden ist.

In der DE 195 08 978 A1 wird ein Kraftstofftank beschrieben, in welchen durch eine Tanköffnung ein Modul eingebracht werden kann, an dem verschiedene Aggregate, wie die Kraftstoffpumpe, ein Kraftstofffilter, eine Tankentlüftung, ein Drucksensor und ein Füllstandgeber befestigt sind. Das Modul wird an der der Öffnung gegenüber liegenden Tankseite in einem so genannten Schlingertopf fixiert.

Das Entnahmerohr weist insbesondere auch hinsichtlich des möglichen Einfrierens des Reduktionsmittels eine hinreichende Festigkeit auf, so dass das Entnahmerohr über mehrere Jahre Gebrauchszeit seine volle Funktionalität beibehält. Es ist dabei insbesondere genügend steif auszulegen, so dass die Positionierung des Tankentnahmerohrs fixiert bleibt. Aufgrund des Einsatzgebietes der SCR-Anlagen in Kraftfahrzeugen ist es erforderlich, dass die Komponenten dieses Systems kompakt und insbesondere flexibel hinsichtlich ihrer Anordnung im Kraftfahrzeug ausgelegt sind.

Hiervon ausgehend ist es Aufgabe der vorliegenden Erfindung, die mit Bezug auf den Stand der Technik geschilderten Probleme teilweise zu lösen. Insbesondere soll ein modulares Tanksystem angegeben werden, dass durch die Herstellung aus verschiedenen Modulen sehr flexibel für verschiedene Anwendungsfälle auslegbar ist. Weiter weist das modulare Tanksystem ein Sumpfelement auf, das einfach und kostengünstig herstellbar ist, ein geringes Gewicht aufweist und zur Stabilisierung der Lage des Entnahmerohrs geeignet ausgelegt ist und die Entnahme selbst in vorteilhafter Weise beeinflusst. Insbesondere soll erreicht werden, dass das Sumpfelement durch eine räumlich flexible Aufnahme des Entnahmerohrs in möglichst vielen verschiedenen Tankformen einsetzbar ist und damit eine kostenintensive individuelle Konstruktion der einzelnen Komponenten für verschiedene Tankformen entfällt.

Diese Aufgaben werden gelöst mit einem modularen Tanksystem gemäß den Merkmalen des Patentanspruchs 1. Vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Demnach wird hier ein modulares Tanksystem für ein flüssiges Reduktionsmittel vorgeschlagen, wobei das Tanksystem zumindest drei Module aufweist:
- ein erstes Modul, umfassend einen Tank mit einer ersten Öffnung und einer zweiten Öffnung,
- ein zweites Modul, umfassend ein Deckelelement zur Aufnahme zumindest eines Entnahmerohrs, und
- ein drittes Modul, umfassend ein Sumpfelement,
wobei das Deckelelement in der ersten Öffnung und das Sumpfelement in der zweiten Öffnung angeordnet sind und das Deckelelement und das Sumpfelement das Entnahmerohr räumlich fixieren.

Die erste Öffnung und zweite Öffnung des Tanks sind dabei insbesondere rund ausgeführt, so dass eine Verdrehung des Deckelementes bzw. Sumpfelementes gegenüber dem Tank ermöglicht ist. Weiterhin ist zumindest ein Entnahmerohr in dem Deckelelement angeordnet, dass sich vom Deckelelement ausgehend in den Tank erstreckt und durch das, insbesondere gegenüberliegend angeordnete, Sumpfelement aufgenommen wird.

Gegenüberliegende Anordnung von Sumpfelement und Deckelelement bedeutet hier insbesondere, dass diese auch unter einem Winkel zueinander angeordnet sein können, insbesondere auch in benachbarten Wandabschnitten des Tanks.

Das zweite Modul und insbesondere auch das Deckelement ist bevorzugt mehrteilig ausgeführt und kann neben dem Entnahmerohr weitere Komponenten aufnehmen, insbesondere eine Rückführungsleitung, die überschüssiges bzw. nicht benötigtes Reduktionsmittel aus dem SCR-Leitungssystem zurück in den Tank leiten kann sowie Sensoren und ggf. Steuer- bzw. Messelektronik. Bevorzugt ist das Entnahmerohr derart in dem Deckelelement befestigt, dass eine ausschließlich transversale Bewegung benötigt wird, um das Entnahmerohr in das Sumpfelement einzuführen. Das Deckelelement weist insbesondere ein gegenüber dem Entnahmerohr drehbares Befestigungselement auf, durch den das Deckelelement mit dem Tank, z.B. über ein Gewinde, verbindbar ist. Somit sind einerseits auch nicht runde Entnahmerohre oder andererseits auch mehrere Komponenten zusammen in das Sumpfelement einführbar. Weiter weist das Deckelelement zumindest eine Dichtfläche zur Abdichtung des Tanks gegenüber der Tankumgebung auf. Insbesondere sind zwei Dichtflächen vorgesehen, die auf unterschiedlichen Durchmessern vollumfänglich ausgebildet sind. Weiter weist das Deckelelement zumindest einen Metallring auf, der bevorzugt in das Deckelelement eingegossen ist. Dieser Metallring ist insbesondere geeignet, die Dichtflächen des Deckelelementes hinsichtlich Rundheit und Ebenheit zu stabilisieren und dauerfest zu gestalten. Ein derartiger Metallring ist bevorzugt auch in der ersten Öffnung des Tanks vorgesehen, bzw. in dem Befestigungselement des Deckelelementes.

Das Sumpfelement ist ausgelegt, das Entnahmerohr in sich aufzunehmen und zu fixieren, wobei auch andere sich durch den Tank erstreckende weitere Elemente, die insbesondere in dem Deckelelement angeordnet sind, in vergleichbarer Weise wie das Entnahmerohr aufgenommen werden können.

Eine räumliche Fixierung des Entnahmerohrs wird insbesondere dadurch erreicht, dass das Entnahmerohr nach Befestigung des Deckelements und des Sumpfelementes am Tank durch das im Tank enthaltene flüssige Reduktionsmittel nicht mehr (durch im Betrieb auftretende Erschütterungen oder dergleichen) bewegbar ist. Insbesondere soll das Entnahmerohr auch bei einem Einfrieren des Reduktionsmittels in seiner Lage unverändert angeordnet bleiben. So werden Spannungen insbesondere am Deckelement und am Tank durch eine Auslenkung des Entnahmerohrs vermieden, die zu einer Undichtigkeit des Tankes bzw. zu einer Schädigung der Komponenten (Tank, Deckelement, Sensoren, Leitungen und Elektrik) führen können.

Der modulare Aufbau dieses Tanksystems erlaubt die Kombination mit verschiedenen Ausgestaltungen der Module, wobei insbesondere erreicht wird, dass bei unterschiedlichen Ausgestaltungen des ersten Moduls mit dem Tank stets gleiche zweite und dritte Module einsetzbar ist und ggf. auftretende Lageunterschiede für das zweite und dritte Modul im Tank mit diesen Modulen selbst ausgeglichen werden. Damit ist nicht nur eine deutliche Reduktion der Teilevielfalt bei gleichzeitig hoher Anpassungsmöglichkeit an die räumlichen Gegebenheiten bei Kraftfahrzeugen gegeben, sondern gleichermaßen auch ein sichere Fixierung und damit dauerhafte Entnahme des Reduktionsmittels in allen Betriebssituationen gewährleistet.

Gemäß einer vorteilhaften Ausgestaltung bildet das Sumpfelement den tiefsten Punkt des Tanks. Damit ist insbesondere gemeint, dass das Sumpfelement das Volumen an Reduktionsmittel im weitgehend geleerten Tank regelmäßig in sich aufnimmt und somit das Entnahmerohr den Tank zumindest nahezu vollständig entleeren kann.

Gemäß einer weiteren vorteilhaften Ausgestaltung ist das Sumpfelement als separates Kunststoffteil gebildet. Für den (bevorzugten) Fall, dass der Tank aus einem Kunststoff gefertigt ist, soll das Sumpfelement bevorzugt aus einem ähnlichen oder gleichen Material hergestellt sein. Weiterhin sind insbesondere Aluminium oder Edelstahl als mögliche Materialien für Sumpfelement und/oder Tank bevorzugt. Kunststoff ist als Werkstoff geeignet, die Harnstoff-Wasser-Lösung auch langfristig ohne Abnutzungserscheinung aufzunehmen. Gegenüber metallischen Tanks sind das Sumpfelement und/oder der Tank in Kunststoff kostengünstiger und hinsichtlich des Gewichts leichter herzustellen.

Gemäß einer besonderen Weiterbildung ist das Sumpfelement mit dem Tank stoffschlüssig verschweißt. Eine derartige Verbindung ist kostengünstig herzustellen und regelmäßig mit höchstmöglicher Dichtigkeit der Verbindung ausführbar. Diese Verbindungsart eignet sich insbesondere zum Einsatz während der Herstellung des Tanks. In diesem Fall ist die Lage des Sumpfelementes gegenüber dem Deckelelement aber festgelegt und eine weiter Änderung der Position des Sumpfelementes nur mit erheblichem Aufwand zu realisieren.

Gemäß einer weiteren vorteilhaften Ausgestaltung weist das Sumpfelement Strukturen auf, die Bewegungen des flüssigen Reduktionsmittels im Bereich des Sumpfelementes reduziert. Damit ist insbesondere gemeint, dass durch die im Betrieb des Tanksystems auftretenden Bewegungen weitgehend vermeiden bzw. reduzieren werden. Dabei ist das Sumpfelement insbesondere derart ausgelegt, dass es ein im Vergleich zum Tank nur sehr geringes Volumen an Reduktionsmittel aufnehmen kann, insbesondere weist es ein Volumen von weniger als 5 % des Tankvolumens auf, besonders bevorzugt weniger als 1 %. Dieses nur geringe Volumen ist in einem gegenüber äußeren Strömungsbewegungen des Reduktionsmittels in dem Tank abgeschirmten Bereich bevorratet, so dass das Entnahmerohr das Reduktionsmittel ohne Lufteinschlüsse oder andere Störungen fördern kann. Gleichzeitig soll hierdurch erreicht werden, dass ggf. vorhandene Messsensoren regelmäßig verlässliche Daten ermitteln können, insbesondere hinsichtlich Temperatur, Dichte, Reflektionsgrad oder Brechungsindex, elektrische Leitfähigkeit und Schallübertragung. Diese Werte des Reduktionsmittels sollen nicht durch Bewegungen des Reduktionsmittels verfälscht werden.

Die Strukturen sind also in dem Sumpfelement derart ausgelegt, dass ein Volumenaustausch zwischen dem vergleichsweise kleinen Volumen des Sumpfelementes und des Tankvolumens weitgehend vermieden werden und wobei weiter das Volumen des Sumpfelementes derart unterteilt ist, dass auch hier Strömungsbewegungen weitgehend reduziert sind.

Gemäß einer weiteren vorteilhaften Ausgestaltung weist das Sumpfelement eine Aufnahme für das Entnahmerohr auf, die zur Fixierung eines unter einem Winkel von 45° bis 90° gegenüber dem Tankboden angeordneten Entnahmerohrs geeignet ist. Der Winkel zwischen Entnahmerohr und Tankboden ist hierbei immer der Winkel ≤ 90° zwischen der Mittelachse des Entnahmerohrs und dem Bereich des Tankbodens, in dem das Sumpfelement aufgenommen ist. Durch eine derartig ausgelegte Aufnahme für das Entnahmerohr und insbesondere durch die runde Ausführung der ersten und zweiten Öffnungen des Tanks, können durch standardisierte Deckel- und Sumpfelemente zahlreiche Tankformen und Positionierungen von Deckelement und Sumpfelement realisiert werden. Damit ist das erfindungsgemäße Sumpfelement geeignet, in nahezu allen, auch nachträglich einzubauenden SCR-Anlagen eingesetzt zu werden.

Durch die insbesondere runde Ausführung der Öffnungen in dem Tank für die Aufnahme des Deckelelements und des Sumpfelements ist gewährleistet, dass Sumpfelement und Deckelelement regelmäßig in einer Ebene zueinander ausgerichtet werden können und somit eine sichere Fixierung des Entnahmerohrs ermöglicht ist.

Gemäß einer weiteren vorteilhaften Ausgestaltung weist das Sumpfelement eine Aufnahme für das Entnahmerohr auf, die eine Passung mit dem Entnahmerohr bildet. Dabei ist diese Passung einerseits hinsichtlich der erforderlichen Haltekräfte und andererseits hinsichtlich der Festigkeit des Entnahmerohrs und der Aufnahme des Sumpfelementes sowie hinsichtlich der Montagekräfte des Entnahmerohrs auszulegen. Insbesondere ist die Passung als Presspassung, als Übergangspassung oder als leichte Spielpassung auszuführen. Das Entnahmerohr könnte sich somit bei Ausführung der Passung als Übergangspassung bzw. leichte Spielpassung insbesondere in das Sumpfelement hinein ausdehnen. Diese Ausgestaltung kann bei sehr steif ausgelegten Tanks notwendig sein, um Spannungen auszugleichen, die durch das Entnahmerohr oder durch den Tank selber in Folge von Wärmedehnungen hervorgerufen wurden.

Gemäß einer weiteren vorteilhaften Weiterbildung weist das Sumpfelement eine Aufnahme für das Entnahmerohr auf, die selbst eine Fase aufweist, die das Einschieben des Entnahmerohrs in die Aufnahme ermöglicht. Diese Fase dient dabei insbesondere der einfachen und sicheren Montage des Entnahmerohrs in dem Sumpfelement, so dass während der Montage keine Beschädigungen an Entnahmerohr oder Deckelelement entstehen können.

Gemäß einer weiteren vorteilhaften Ausgestaltung ist die Aufnahme des Sumpfelementes für das Entnahmerohr derart gestaltet, dass eine ausreichende Fixierung des Entnahmerohrs gewährleistet ist, ohne die vollständige Länge der Aufnahme des Sumpfelementes auszunutzen. Insbesondere weist die Aufnahme des Sumpfelementes für das Entnahmerohr eine Länge von mindestens 50 mm auf, bevorzugt mindestens 150 mm. Dabei ist die vorgeschlagene Fase insbesondere nicht in diesen Längenangaben enthalten. Durch eine derartig ausgelegte Aufnahme können insbesondere Entnahmerohre verschiedener Längen bzw. Tanks mit unterschiedlichem Abstand und Winkel zwischen erster Öffnung und zweiter Öffnung verwendet werden. Dabei ist aber insbesondere zu beachten, dass das Entnahmerohr sich soweit in das Sumpfelement erstreckt, dass die Förderung von strömungstechnisch beruhigtem Reduktionsmittel möglich ist.

Eine besonders bevorzugte Ausgestaltung des modularen Tanksystems sieht vor, dass das Sumpfelement einteilig ausgeführt ist. Einteilig heißt hier insbesondere, dass das Sumpfelement aus zumindest stoffschlüssig miteinander verbundenen Komponenten besteht oder in einem Schritt herstellbar ist, z.B. durch Gießen (Kunststoffdruckguss). Das Sumpfelement kann insbesondere auch zweiteilig ausgeführt sein, wobei das Sumpfelement und die Strukturen insbesondere aus verschiedenen Materialien hergestellt sind.

Es wird weiter ein Sumpfelement insbesondere für den Einsatz in erfindungsgemäßen modularen Tanksystemen für ein flüssiges Reduktionsmittel vorgeschlagen.

Ebenso wird ein Kraftfahrzeug vorgeschlagen, das ein erfindungsgemäßes modulares Tanksystem aufweist.

Die Erfindung sowie das technische Umfeld werden nachfolgend anhand der beiliegenden Figuren erläutert. Es ist darauf hinzuweisen, dass die Figuren besonders bevorzugte Ausführungsvarianten der Erfindung zeigen, auf die sie jedoch nicht beschränkt sind. Für gleiche Gegenstände werden in den Figuren auch gleich Bezugszeichen verwendet. Es zeigen (schematisch):
Fig. 1: ein Kraftfahrzeug mit einem Tank in einer Seitenansicht,
Fig. 2: ein erstes Sumpfelement in einem ersten Querschnitt,
Fig. 3: das erste Sumpfelement in einem zweiten Querschnitt und
Fig. 4: ein Sumpfelement angeordnet in einem Tank.

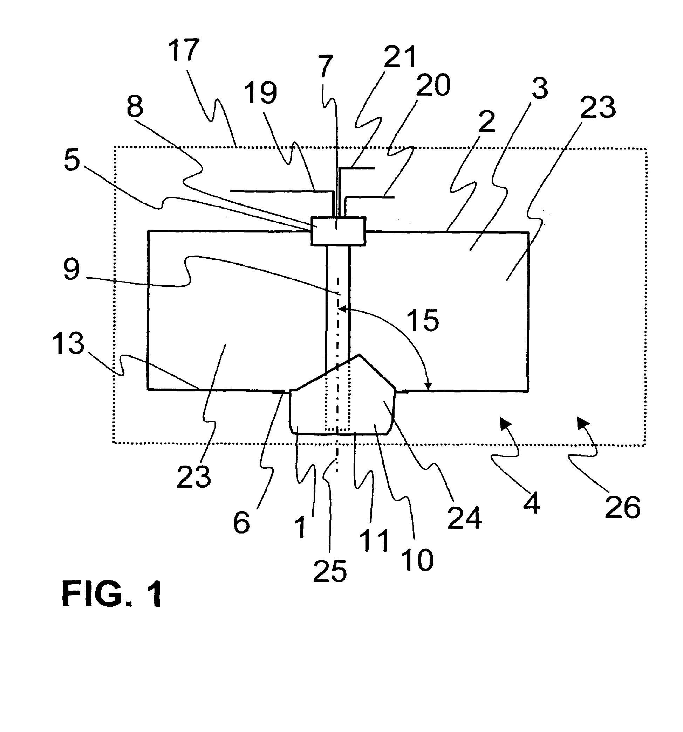

Fig. 1 zeigt schematisch in einer Seitenansicht ein Kraftfahrzeug 17 mit einem modularen Tanksystem 26, das zumindest drei Module aufweist, ein erstes Modul 4, umfassend einen Tank 2 mit einer ersten Öffnung 5 und einer gegenüberliegend angeordneten zweiten Öffnung 6, ein zweites Modul 7, umfassend ein Deckelelement 8, das hier dargestellt ein Entnahmerohr 9, eine Entnahmeleitung 19 und eine Rückführungsleitung 20 aufweist sowie elektrische Leitungen 21, die insbesondere ggf. vorhandene Sensoren bzw. erforderliche Steuer- und Messelektronik mit elektrischer Energie versorgen. Weiter weist der Tank 2 ein drittes Modul 10 auf, das ein Sumpfelement 1 umfasst. Das Sumpfelement 1 ist dabei im Bereich des Tankbodens 13 in einer zweiten Öffnung 6 angeordnet, wobei die zweite Öffnung 6 der ersten Öffnung 5 gegenüberliegend innerhalb des Tankes 2 angeordnet ist, so dass sich das Entnahmerohr 9 ausgehend von dem Deckelelement 8 zum Sumpfelement 1 erstrecken kann und in diesem aufgenommen ist. Zwischen Tankboden 13 und Mittelachse 25 des Entnahmerohrs 9 wird ein Winkel 15 gebildet, auf den in den weiteren Figuren näher eingegangen wird. Der Tank 2 hat ein Tankvolumen 23 und das Sumpfelement 1 ein Volumen 24, wobei das Volumen 24 gegenüber dem Tankvolumen 23 klein ist.

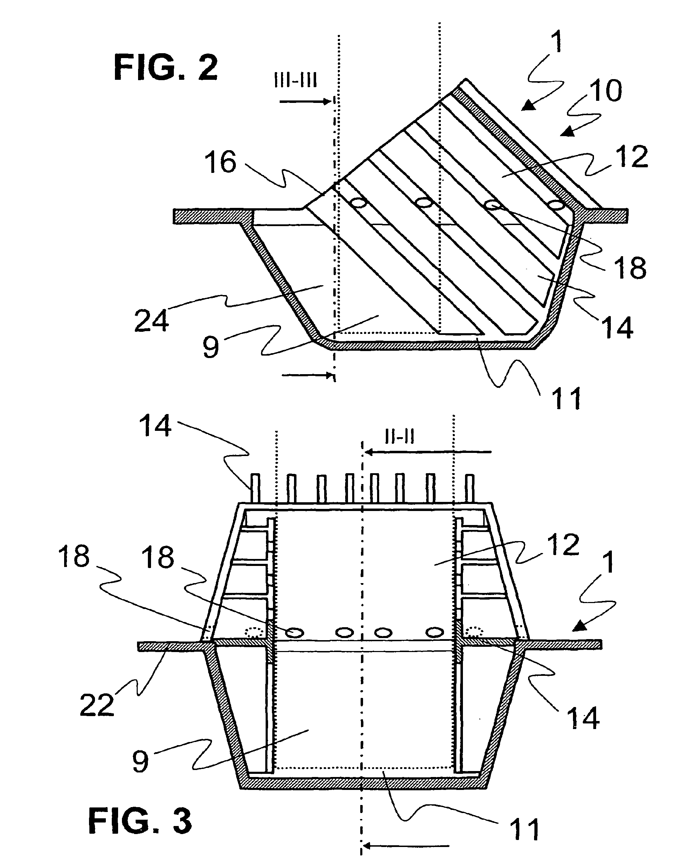

Fig. 2 zeigt schematisch einen Querschnitt eines Sumpfelementes 1 in einer ersten Seitenansicht, wobei sich ein Entnahmerohr 9 in das dritte Modul 10 des Tanks 2, also in das Sumpfelement 1, hinein erstreckt. Das Sumpfelement 1 stellt den tiefsten Punkt 11 des Tanks 2 dar, so dass das Entnahmerohr 9 den Tank 2 weitestgehend entleeren kann. Das Sumpfelement 1 ist weiter durch Strukturen 14 unterteilt, die gleichzeitig die Aufnahme 12 zur Aufnahme und Fixierung des Entnahmerohrs 9 bilden und die Strömungsbewegungen des Reduktionsmittels 3 weitgehend reduzieren bzw. vollständig vermeiden sollen. In den Seitenwänden des Sumpfelementes 1 sind zudem Aussparungen 18 vorgesehen, durch die das Reduktionsmittel 3 aus dem Tankvolumen 23 des Tanks 2 in das Volumen 24 des Sumpfelementes 1 einfließen können, so dass unabhängig von der Neigung des Tanks 2 das Sumpfelement 1 möglichst befüllt ist und das Volumen 24 des Reduktionsmittels 3 des Tankes 2 kurz vor der vollständigen Entleerung in sich aufnimmt. Dabei ist das Volumen 24 des Sumpfelementes 1 durch die Aussparungen 18, durch die das Reduktionsmittel 3 in das Sumpfelement 1 einfließen kann, zum Tank 2 hin begrenzt. Durch die Achse III-III ist die Querschnittsebene des Sumpfelementes 1 angegeben, das nachfolgend in der Fig. 3 beschrieben ist.

Fig. 3 zeigt schematisch das Sumpfelement 1 gemäß Fig. 2 in einer weiteren Seitenansicht, wobei die Querschnittsebene, in der das Sumpfelement 1 in der Fig. 2 dargestellt ist, hier durch die Achse II-II angegeben ist. Das Entnahmerohr 9 erstreckt sich in das Sumpfelement 1 nahezu bis zu dem tiefsten Punkt 11 des Tankvolumens 23, der durch das Sumpfelement 1 aufgenommen ist. Die Strukturen 14 sind hier teilweise geschnitten dargestellt, wobei die Strukturen 14 hier zumindest teilweise die Aufnahme 12 bilden, durch die das Entnahmerohr 9 in dem Sumpfelement 1 aufgenommen und fixiert wird. Zudem sind Aussparungen 18 in den Seitenwänden des Sumpfelementes 1 auf Höhe des Tankbodens 13 dargestellt, die ein Einfließen des Reduktionsmittels 3 aus dem das Sumpfelement 1 umliegenden Tankvolumen 23 ermöglichen soll.

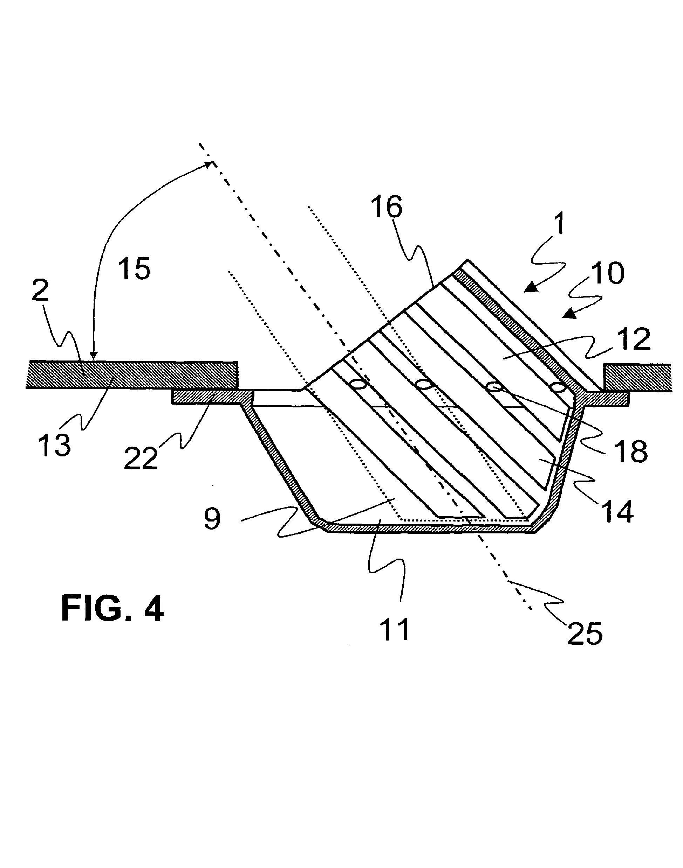

Fig. 4 zeigt schematisch das Sumpfelement 1 des dritten Moduls 10 in einer weiteren Seitenansicht, wobei hier das Entnahmerohr 9 unter einen Winkel 15 zwischen Mittelachse 25 des Entnahmerohrs 9 und dem Tankboden 13 angeordnet ist. Das Sumpfelement ist über den Flansch 22 mit dem Tank 2 bzw. dem Tankboden 13 verbunden. Das Entnahmerohr 9 ist hier mit einer angepassten Form dargestellt, so dass eine nahezu vollständige Entleerung des Volumens 24 möglich ist, so dass auch Reduktionsmittel 3, das in dem Sumpfelement 1 am tiefsten Punkt 11 des Tanks 2 enthalten ist, aus dem Tank 2 gefördert werden kann. Dies ist nicht immer erforderlich. Es kann demgegenüber auch ein standardisiertes Entnahmerohr 9 vorgesehen sein, das das Volumen 24 im Sumpfelement 1 wenigstens zum größten Teil entleeren kann. Das Sumpfelement 1 weist an seiner Aufnahme 12 für das Entnahmerohr 9 eine Fase 16 auf, die ein Einschieben des Entnahmerohres 9 in das Sumpfelement 1 erleichtert.

### Bezugszeichenliste

1 Sumpfelement
2 Tank
3 Reduktionsmittel
4 Erstes Modul
5 Erste Öffnung
6 Zweite Öffnung
7 Zweites Modul
8 Deckelelement
9 Entnahmerohr
10 Drittes Modul
11 Tiefster Punkt
12 Aufnahme
13 Tankboden
14 Strukturen
15 Winkel
16 Fase
17 Kraftfahrzeug
18 Aussparungen
19 Entnahmeleitung
20 Rückführungsleitung
21 Elektrische Leitungen
22 Flansch
23 Tankvolumen
24 Volumen
25 Mittelachse
26 Modulares Tanksystem

## Patentansprüche

1. Modulares Tanksystem (26) für ein flüssiges Reduktionsmittel (3), wobei das Tanksystem (26) zumindest drei Module aufweist:
- ein erstes Modul (4), umfassend einen Tank (2) mit einer ersten Öffnung (5) und einer zweiten Öffnung (6),
- ein zweites Modul (7), umfassend ein Deckelelement (8) zur Aufnahme zumindest eines Entnahmerohrs (9), und
- ein drittes Modul (10), umfassend ein Sumpfelement (1),
wobei das Deckelelement (8) in der ersten Öffnung (5) und das Sumpfelement (1) in der zweiten Öffnung (6) angeordnet sind und das Deckelelement (8) und das Sumpfelement (1) das Entnahmerohr (9) räumlich fixieren.

2. Modulares Tanksystem (26) gemäß Patentanspruch 1, wobei das Sumpfelement (1) den tiefsten Punkt (11) des Tanks (2) bildet.

3. Modulares Tanksystem (26) gemäß Patentanspruch 1 oder 2, wobei das Sumpfelement (1) als separates Kunststoffteil gebildet ist.

4. Modulares Tanksystem (26) gemäß einem der vorhergehenden Patentansprüche, wobei das Sumpfelement (1) mit dem Tank (2) stoffschlüssig verschweißt ist.

5. Modulares Tanksystem (26) gemäß einem der vorhergehenden Patentansprüche, wobei das Sumpfelement (1) Strukturen (14) aufweist, die Bewegungen des flüssigen Reduktionsmittels (3) im Bereich des Sumpfelementes (1) reduziert.

6. Modulares Tanksystem (26) gemäß einem der vorhergehenden Patentansprüche, wobei das Sumpfelement (1) eine Aufnahme (12) für das Entnahmerohr (9) aufweist, die zur Fixierung eines unter einem Winkel (15) von 45 bis 90° gegenüber dem Tankboden (13) angeordneten Entnahmerohrs (9) geeignet ist.

7. Modulares Tanksystem (26) gemäß einem der vorhergehenden Patentansprüche, wobei das Sumpfelement (1) eine Aufnahme (12) für das Entnahmerohr (9) aufweist, die eine Passung mit dem Entnahmerohr (9) bildet.

8. Modulares Tanksystem (26) gemäß einem der vorhergehenden Patentansprüche, wobei das Sumpfelement (1) eine Aufnahme (12) für das Entnahmerohr (9) aufweist, die eine Fase (16) aufweist, die das Einschieben des Entnahmerohres (9) in die Aufnahme (12) ermöglicht.

9. Modulares Tanksystem (26) gemäß einem der vorhergehenden Patentansprüche, wobei das Sumpfelement (1) einteilig ausgeführt ist.

10. Kraftfahrzeug (17), aufweisend ein modulares Tanksystem (26) gemäß einem der vorhergehenden Patentansprüche.

## Claims

1. A modular tank system (26) for a liquid reducing agent (3), wherein the tank system (26) has at least three modules:
- a first module (4) comprising a tank (2) having a first opening (5) and a second opening (6),
- a second module (7) comprising a cap element (8) for accommodating at least one discharge tube (9), and
- a third module (10) comprising a sump element (1),
wherein the cap element (8) is disposed in the first opening (5) and the sump element (1) is disposed in the second opening (6), and the cap element (8) and the sump element (1) spatially fix the discharge tube (9).

2. The modular tank system (26) as claimed in claim 1, wherein the sump element (1) forms the lowest point (11) of the tank (2).

3. The modular tank system (26) as claimed in claim 1 or 2, wherein the sump element (1) is formed as a separate plastic part.

4. The modular tank system (26) as claimed in one of the preceding claims, wherein the sump element (1) is welded to the tank (2) with a material bond.

5. The modular tank system (26) as claimed in one of the preceding claims, wherein the sump element (1) has structures (14) reducing movements of the liquid reducing agent (3) in the vicinity of the sump element (1).

6. The modular tank system (26) as claimed in one of the preceding claims, wherein the sump element (1) has a holder (12) for the discharge tube (9), the holder being suitable for fixing a discharge tube (9) being arranged at an angle (15) of 45 to 90° to the tank bottom (13).

7. The modular tank system (26) as claimed in one of the preceding claims, wherein the sump element (1) has a holder (12) for the discharge tube (9), the holder forming a fitting for the discharge tube (9).

8. The modular tank system (26) as claimed in one of the preceding claims, wherein the sump element (1) has a holder (12) for the discharge tube (9), the holder having a chamfer (16) allowing the discharge tube (9) to be pushed into the holder (12).

9. The modular tank system (26) as claimed in one of the preceding claims, wherein the sump element (1) is formed in one piece.

10. A motor vehicle (17) having a modular tank system (26) as claimed in one of the preceding claims.

## Revendications

1. Système de réservoir modulaire (26) pour un agent de réduction liquide (3), le système de réservoir (26) comportant au moins trois modules :
- un premier module (4) comprenant un tank (2) avec une première ouverture (5) et une deuxième ouverture (6),
- un deuxième module (7) comprenant un élément de couvercle (8) pour recevoir au moins un tube de soutirage (9), et
- un troisième module (10) comprenant un élément de fond (1),
l'élément de couvercle (8) étant agencé dans la première ouverture (5) et l'élément de fond (1) dans la deuxième ouverture (6) et l'élément de couvercle (8) et l'élément de fond (1) fixent spatialement le tube de soutirage (9).

2. Système de réservoir modulaire (26) selon la revendication 1, l'élément de fond (1) formant le point le plus profond (11) du réservoir (2).

3. Système de réservoir modulaire (26) selon la revendication 1 ou 2, l'élément de fond (1) étant formé comme pièce en matière plastique séparée.

4. Système de réservoir modulaire (26) selon l'une des revendications précédentes, l'élément de fond (1) étant soudé au réservoir (2) de façon matériellement jointive.

5. Système de réservoir modulaire (26) selon l'une des revendications précédentes, l'élément de fond (1) ayant des structures (14) qui réduisent des mouvements de l'agent de réduction liquide (3) dans la région de l'élément de fond (1).

6. Système de réservoir modulaire (26) selon l'une des revendications précédentes, l'élément de fond (1) étant doté d'un logement (12) pour le tube de soutirage (9) qui est approprié à fixer un tube de soutirage qui est agencé suivant un angle (15) de 45° à 90° par rapport au fond du réservoir (13).

7. Système de réservoir modulaire (26) selon l'une des revendications précédentes, l'élément de fond (1) ayant un logement (12) pour le tube de soutirage (9) qui forme un ajustement avec le tube de soutirage (9).

8. Système de réservoir modulaire (26) selon l'une des revendications précédentes, l'élément de fond (1) étant doté d'un logement (12) pour le tube de soutirage (9), qui a un chanfrein (16) qui permet l'introduction du tube de soutirage (9) dans le logement (12).

9. Système de réservoir modulaire (26) selon l'une des revendications précédentes, l'élément de fond (1) étant réalisé en une pièce.

10. Véhicule automobile (17) étant doté d'un système de réservoir modulaire (26) selon l'une des revendications précédentes.
